# EUROPEAN PATENT APPLICATION

(11) **EP 2 482 548 A1**
(43) Date of publication of application: **01.08.2012**
(21) Application number: 11290039.4
(22) Date of filing: 21.01.2011
(51) Int. Cl.: H04N 5/445

(54) **A method, a system, a server, a client, a computer program and a computer program product for determining a user guide in a computer network**

(71) Applicant: Alcatel Lucent, 75007 Paris (FR)
(72) Inventor: Jabaud, Philippe, 91580 Etrechy (FR); Le Berre, Olivier, 91120 Palaiseau (FR); Joubert, Eric, 78730 Sainte-Mesme (FR)
(74) Representative: Wetzel, Emmanuelle

(57) **Abstract**

The invention concerns a method for determining a user guide in a computer network, wherein a message (202) comprising information about at least two devices (111, 112, 131, 141) selected (200) by a user is received by a server (102), said user guide is determined (203) by said server (102) depending on information about devices (111, 112, 131, 141) retrieved from storage and said message (202), and a further message (204) comprising at least a part of said user guide is sent by said server (102).

## Description

### Field of the invention

The invention relates to a method, a system, a server, a client, a computer program and a computer program product for determining a user guide in a computer network.

### Background

Many electronic devices are adapted to be connected to other electronic devices, e.g. via cables or wirelessly.

In order to provide reliable connectivity such connections typically use standardized connectors, jacks, antennas, cables or network protocols.

To facilitate the set up of a connection between electronic devices, a certain electronic device usually comes with a paper or electronic installation guide.

The installation guide amongst other things explains the connectivity of the electronic device, e.g. which connectors, jacks or antennas are available, or which protocols are supported. Sometimes said user guide also comprises an explanation about how to connect the electronic device at hand with another electronic device, e.g. how to connect a cable television receiver to a television.

However due to the fact that many different electronic devices are produced by many manufactures for the same or a similar purpose, it is virtually impossible to include specific guidelines for each and every other electronic device that may possibly be connected to a certain electronic device.

This means that the information in such user guides is limited to standard explanations and no specific information about the other electronic devices are taken into account.

The user sometimes is left to browse several installation guides of all electronic devices that shall be connected. For inexperienced users this may make things more confusing rather than clearer.

Last resort sometimes is to visit a dedicated user forum on the Internet where people share their problems and solutions for their specific environment, i.e. devices and available connectivity.

Summarizing the above, connecting electronic devices with each other is a cumbersome and time consuming task, that gets worse the more electronic devices are used. This may even result in less than optimal performance of the overall system.

### Summary

The object of the invention is thus to facilitate the process of connecting electronic devices.

An idea of the invention is to determine a user guide in a computer network, wherein a message comprising information about at least two devices selected by a user is received by a server, said user guide is determined by said server depending on information about devices retrieved from storage and said message, and a further message comprising at least a part of said user guide is sent by said server.

An idea of the invention also is to output a user guide in a computer network, wherein a user is prompted for information about at least two devices by a client, a message comprising said information about said at least two devices is determined by said client, said message is sent by said client, a further message comprising at least part of said user guide is received by said client, and said user guide is output at least partially by said client.

Advantageously said information about said devices comprises a machine readable rule concerning the connectivity between at least two of said devices and said user guide is determined depending on said machine readable rule.

Advantageously a list of devices is requested by said client from a server, information about said list is output by said client when prompting for said user input, a selection of said user from said list is determined by said client, and said information about said at least two devices is determined by said client depending on said selection of said user from said list.

Further developments of the invention can be gathered from dependent claims and the following description.

### Brief description of the figures

In the following the invention will be explained further making reference to the attached drawings.
Fig. 1 schematically shows a first part of a computer network.
Fig. 2 schematically shows a first sequence diagram.

### Description of the embodiments

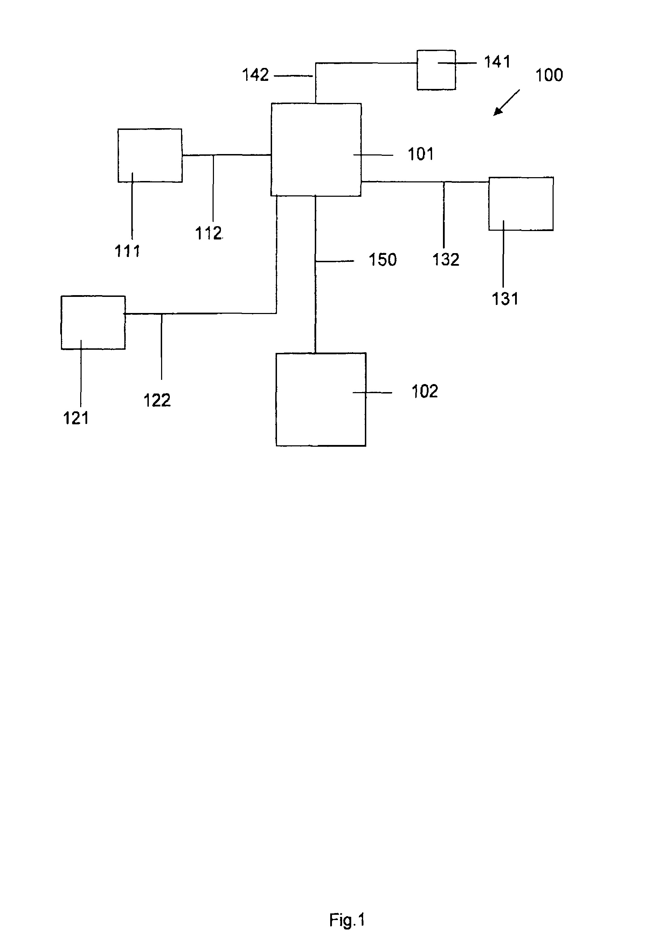

Figure 1 shows a first part of a computer network 100.

Said computer network 100 comprises for example a client 101, a server 102, a first device 111, a second device 121, a third device 131 and a fourth device 141. Said computer network 100 may comprise more or less devices.

Said client 101 is for example a personal media center computer including hard disk, USB port, Ethernet network card supporting Transmission Control Protocol/Internet Protocol (TCP/IP), Bluetooth card, S-video card with S-video input and output jack, sound card with RCA/Cinch audio input and output jack, High Definition Multimedia Interface (HDMI) input and output jack. Said client 101 is adapted to connect to said computer network 100.

Said client 101 may be a handheld device like a mobile phone as well.

Said server 102 is for example a single server or virtual server in a computing cloud and comprises for example an Ethernet network card supporting Transmission Control Protocol/Internet Protocol (TCP/IP) adapted to connect to said computer network 100.

Said first device 111 is for example a TV supporting HDMI, composite and s-video signals, having composite, HDMI and s-video input jacks, being already connected to said client 101, e.g. said personal media center computer via a first data link 112. Said client 101 doesn't have to be connected to said device 111. Instead said client 101 may be adapted to be not connected to said first device 111. In this case said first data link is inexistent.

Said first data link for example comprises a S-video cable and jacks.

Said second device 121 is for example an audio amplifier including a speaker accepting analogue stereo audio input via two RCA jacks, being already connected to said client 101, e.g. said personal media center computer, via a second data link 122.

Said second data link 122 for example comprises two coaxial cables each with two RCA jacks.

Said third device 131 is for example a TV cable decoder supporting DVB-C input, having coaxial input jack with F-connector, and HDMI, S-video composite output, having HDMI, S-Video and composite output jack) not connected.

Said third device 131, e.g. said TV cable decoder, is connected to a wall outlet (F-connector) for cable television with a coaxial cable and F-connectors.

Said fourth device 141 is for example a mobile phone. Said fourth device 141, e.g. said mobile phone, is for example connected to said client 101, e.g. said personal media center computer, via a fourth data link 142.

Said fourth data link 142 is for example a Bluetooth link.

A fifth data link 150 connects said client 101 and said server 102. Said fifth data link 150 is for example a TCP/IP link.

Said client 101, server 102 and each device 111, 121, 131, 141 is for example identifiable by unique vendor and device identification that are mapped to the name and type of the respective vendor and device. An example for a practicable identification of devices is the well known MAC address for network devices comprised in each of said devices 111, 121, 131, 141, said client 101 or said server 102. For any other type of identification the invention is similarly applicable.

Not depicted in figure 1 is a data base storing this vendor and device identification and the mapping of them to a description of the respective devices capabilities, available connectors and priority of preferred connection type. This data base is referred to more generally as storage.

The aforementioned connections via the aforementioned data links 112, 122, 132, 141, 140 offer connectivity of said client 101, said server 102, said first device 111, said second device 121 or said third device 131 according to well known standards that are not explained here further. The invention is not limited to the aforementioned standard connectors. The invention also applies to any other standard or non standard connector, jack, data link or the like, allowing interconnecting electronic devices.

Said client 101 is adapted to send information about device capabilities and available connectors to said server 102 in a message. Said client 101 does not necessarily store said information about said device capabilities. If this information is not stored on said client 101, said server 102 is adapted to provide this information. In this scenario said client 101 is adapted to provide device reference and identity so that said server 102 may retrieve the corresponding capabilities.

Said client 101 is adapted to prompt said user for information about at least two of said devices 111, 112, 131, 140 that the user wants to connect to each other. In the example said client 101 is said media center computer that is adapted to display said information via said first device 111, e.g. said TV. Said client 101 may comprise of a display or a touch screen display as well, adapted to display this prompt.

Said client 101 may be adapted to accept a list of more than two devices, in case said user wishes to connect more than two devices at a time. In the example said client 101 is said media center computer that is adapted to receive said information via said first device 111, e.g. from remote control input received by said TV. Said client 101 may be adapted to connect to said server 102 directly or via any other of said devices 111, 112, 131, 140. Said client 101 may comprise of a user interface, e.g. a button or a touch screen, as well, adapted to receive said user input as reply to said user prompt.

Said client 101 may be adapted to prompt for said identification, e.g. by displaying a list of known device vendors, model types or the like.

Said client 101 may be adapted to request said list from a knowledge base, e.g. from said server 102, via said fifth data link 150.

In this case said client 101 may be adapted to determine said information about said at least two devices from input of said user via a user interface. Said user interface is for example a keyboard or a touch-screen or a remote control device that is connected to said client 101.

Said client 101 is adapted to determine said message comprising said information about said at least two devices 111, 121, 131, 140 and to send said message via said fifth data link 150, for example using said TCP/IP connection, to said server 102.

Said client 101 is adapted to receive a further message comprising at least part of said user guide, and to output said user guide at least partially, e.g. on a display or via a speaker.

In the first case said user guide is for example provided (partially) as a document file, e.g. ASCII text, in the latter case as an audio file.

Said client 101 may be adapted to receive and output said user guide in any other format as well and convert it into any other format usable for output of said user guide.

Instead of converting said user guide on said client 101, said user guide could also be transferred to said client 101 in another format from said server (HTML or PDF for instance). This way said client 101 has not to perform aforementioned format adaptation.

Said client 101 may be adapted to receive and output an error message in case no connection is possible.

Said server 102 is adapted to determine optimal connections from the information about said at least two devices 111, 121, 131, 141. To this end said server 102 may read information about said devices 111, 121, 131, 141 from said storage.

Said server 102 may be adapted to read machine readable rules and predefined phrases that may be stored in said storage as well or requested from a further data base.

Said server 102 may be adapted to generate instructions, i.e. said user guide, from said predefined phrases depending on said machine readable rules, and to send said instructions as user guide in a further message to said client 101.

In order to determined optimal connections, said machine readable rules for example comprise information about all possible connections for a certain device.

Said server 102 for example comprises of an automated reasoner, i.e. a computer program, executed on said server 102, adapted to determine said optimal connections for said at least two devices 111, 121, 131, 141 depending on said machine readable rules.

Said server 102 may be adapted to send said error message in case no connection between any of said at least two devices 111, 121, 131, 141 is possible.

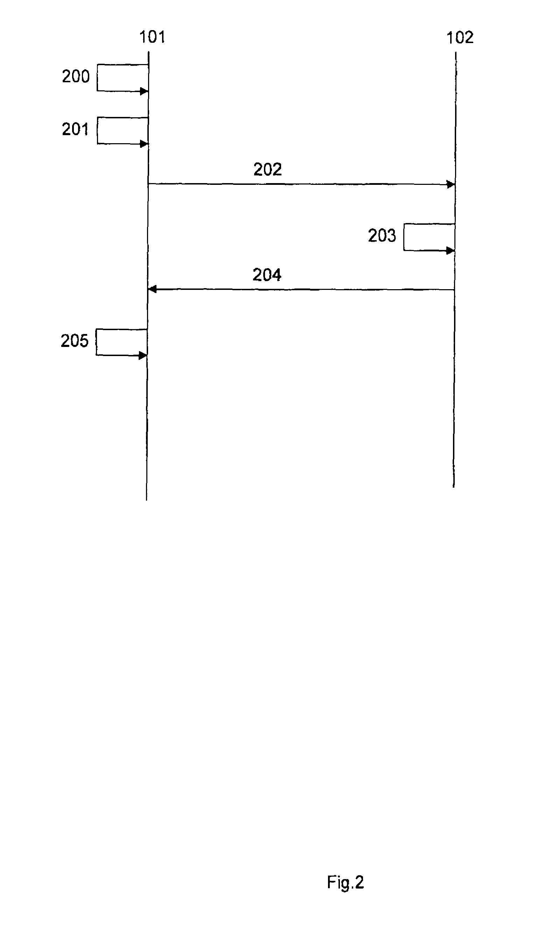

A method for guiding said user is in said computer network 100 is described below making reference to figure 2.

The purpose of said method is to determine the optimal interconnectivity between the electronic devices. In the example, said third device 131, for example said TV cable decoder, has not been connected yet and shall be integrated into the system comprising the other electronic devices 111, 121, 141 via a third data link 132. Optional said system may extend to include said client 101 as well.

In a general scenario said third device 131 may be adapted to be connected to any of said other electronic devices 111, 121, 141 and said client 101.

In the example said third device 131 is said cable TV decoder supporting DVB-C. Its coaxial input jack is already connected with F-connectors and coaxial cable to the wall outlet. The HDMI, S-video and composite outputs, having HDMI, S-Video and composite output jacks are not yet connected. Hence said method is used as described below to generate a specific user guide with instructions on how to connect said third device 131 to said other electronic devices 111, 121, 141. Optional said instructions may extend to how to connect said third device 131 to said client 101 as well.

Said method for example starts when said client 101 detects that said user presses a button on said client 101.

Afterwards, in a step 200 said client 101 prompts said user for information about said at least two devices 111, 121, 131, 141.

In the example in a first step the user prompt displayed asks to provide said identification of all devices that shall form part of said system. Said client 101 may be part of said system or not, in fact said client 101 need not to be part of said system of electronic devices itself. Said server 102 or any other server or device may be part of said system as well.

Afterwards, in a step 201, said client 101 determines said message comprising said information about said at least two devices 111, 121, 131, 141.

Afterwards said message is sent as a message 202 to said server 102. Said message 202 is for example a TCP/IP message.

Upon receipt of said message 202, said server 102 determines said information about at least two devices 111, 121, 131, 141 selected by said user from said message. In the example said identification of all devices that shall form part of the system are determined.

Afterwards, in a step 203, said server 102 determines said user guide depending on said information about said devices 111, 112, 131, 141 retrieved from said storage and said information about said at least two devices 111, 121, 131, 141, received in said message.

In the example said server 102 reads the machine readable rules that are associated with the identifications from storage.

Afterwards said server 102 determines the best interconnectivity option for the system by processing said machine readable rules using an automated reasoner. Said machine readable rules may be ontologies or rules of a knowledge based system that describe the connectivity of individual devices. Said machine readable rules may comprise priorities that are assigned to certain connectors for certain device types. Said automated reasoner may be said computer program that operates on said rules.

An example for such rules is given below for the third device 131, the first device 111 and the client 101 referencing the cable decoder, the TV and the personal media center computer respectively as examples:

### rule 1

Device Name: cable decoder
ID: 12345
Device Type: receiver
Input Type: DVB-C
Output Type: HDMI, S-video, composite
Input Priority: DVB-C
Input Device Preference: LMB
Output Priority: HDMI
Output Device Preference: TV
**rule 2**
Device Name: TV
ID: 54321
Device Type: TV
Input Type: HDMI, S-video, composite
Input Priority: HDMI
Input Device Preference: receiver
Output Priority: -
Output Device Preference: -

### rule 3

Device Name: personal media center
   ID: 55555
Device Type: sender, receiver
   Input Type: hard disk, USB, Ethernet, TCP/IP, Bluetooth, S-video, RCA/Cinch audio, HDMI.
Output Type: USB, Ethernet, TCP/IP, Bluetooth, S-video, RCA/Cinch audio, HDMI
Input Priority: TCP/IP
Input Device Preference: server
Output Priority: HDMI
Output Device Preference: TV

As can be seen from the exemplary rules above, there is a conflict that the TV can accept only one HDMI connection but two devices (cable decoder and personal media center) have the output priority HDMI. This means that only one of the devices may be connected directly to the TV via the HDMI interface. In this exemplary case two options are available:
- connecting one of the devices with the inferior S-Video or composite to the TV
- connecting one device via the other device to the TV using the better HDMI interface.

According to the example said automated reasoner is programmed to select the best possible video format, in this case HDMI, for as many connections as possible. Therefore the option to connect the cable decoder to the personal media center computer and the personal media center computer to the TV (both via HDMI) is selected.

However, said automated reasoner may be programmed in another example to apply other criteria, such as reducing the amount of intermediate devices. In that case, the user guide would recommend connecting the cable decoder and the personal media center computer directly to the TV, noting that there exist two options that excluding each other for each of the connections (HDMI, S-video).

In any case, as a result said server 102 determines said user guide, e.g. said document file or said audio file. In the example said document file is created as a PDF document.

Afterwards said server 102 determines said further message, e.g. by splitting up said user guide into parts that are suitable for network transport or display on the client side.

Afterwards, said server 102 sends said further message as a message 204 comprising at least a part of said user guide to said client 101. Said message 204 is for example a TCP/IP message.

In case no connection can be found, e.g. by said automated reasoner, said error message is send as said message 204.

Upon receipt of said message 204 said client 101 determines said at least part of said user guide in a step 205, and outputs said user guide at least partially. Optionally said client 101 may wait until all parts of said user guide are received and output said user guide afterwards.

Said output may also be stored on said hard disk of said client 101 or printed via a printer.

Afterwards said method ends.

In an advantageous implementation of said method, before prompting said user for input, said list of devices is requested by said client 101 from said server 102 and upon receipt of a reply to said request from said server 102, said list is output, e.g. displayed or read out, by said client 101.

Another advantageous modification of said method comprises of the step of providing a recommendation of a device suitable to complete existing configurations. This information may be provided together with said prompt for user input and may be provided with said list of devices by said server 102. This way for example manufactures could provide new devices or better suitable devices to said user. For example said recommendations are highlighted in a different color or with a different font, when said output is displayed. Alternatively said recommendations may be announced by a keyword like "recommended" when said output is read out.

In this case said message is determined from a selection detected by said client 101, e.g. by determining user input via said user interface. Afterwards said message is sent as described above in said method step 202

Alternatively said client 101 may be adapted to perform the task of said server. In this case no messages are sent.

Instead said client 101 comprises a storage, and wherein in said method the step 201 of determining and sending said message 202 comprising information about at least two devices 111, 112, 131, 141 selected by said user is replaced by a step of determining said user guide depending on information about devices 111, 112, 131, 141 retrieved from said storage and said message 202. Furthermore the step 203 of determining at least a part of said user guide is performed by said client 101.

Furthermore said client 101 in this case may be adapted to perform an additional step of storing said at least part of said user guide at least temporarily on said client 101 and read said at least part of said user guide from storage in order to output it via said display or speaker.

Optionally said client 101 may be a personal computer accessing a web service providing the connectivity information via Internet Protocol and Hyper Text Markup Language.

The information about abovementioned devices may be stored in said storage by device constructors for instance or by users based on their own experience.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for determining a user guide, in particular regarding the connectivity of electronic devices, in a computer network, **wherein** a message (202) comprising information about at least two devices (111, 121, 131, 141) selected (200) by a user is received by a server (102), said user guide is determined (203) by said server (102) depending on information or rules about devices (111, 121, 131, 141) retrieved from storage and said message (202), and a further message (204) comprising at least a part of said user guide is sent by said server (102).

2. The method according to claim 1, wherein said information about said devices (111, 121, 131, 141) comprises a machine readable rule concerning the connectivity between at least two of said devices (111, 121, 131, 141) and said user guide is determined (203) depending on said machine readable rule.

3. The method according to claim 1, wherein said user guide is determined (203) as a document file.

4. The method according to claim 1, wherein said user guide is determined (203) as an audio file.

5. A method for outputting a user guide in a computer network, wherein a user is prompted for information about at least two devices (111, 121, 131, 141) by a client (101), a message comprising said information about said at least two devices (111, 121, 131, 141) is determined by said client (101), said message (202) is sent by said client (101), a further message (204) comprising at least part of said user guide is received by said client (101), and said user guide is output at least partially by said client (101).

6. The method according to claim 5, wherein a list of devices (111, 121, 131, 141) is requested by said client (101) from a server (102), information about said list is output by said client (101) when prompting (200) for said user input, a selection of said user from said list is determined by said client (101), and said information about said at least two devices (111, 121, 131, 141) is determined by said client (101) depending on said selection of said user from said list.

7. The method according to claim 5, wherein said further message (204) comprises at least part of a document file, said client (101) comprises a display and said document file is displayed (205) at least partially on said display.

8. The method according to claim 5, wherein said further message (204) comprises at least part of an audio file, said client (101) comprises a speaker and said audio file is read out (205) at least partially via said speaker.

9. The method according to claim 5, wherein said client (101) comprises a storage, wherein in said method the step of sending said message (202) comprising information about at least two devices (111, 121, 131, 141) selected (200) by said user is replaced by a step of determining said user guide depending on information about devices (111, 121, 131, 141) retrieved from said storage and said message (202), and the step of receiving said further message (204) comprising at least a part of said user guide is replaced by a step of storing said at least part of said user guide at least temporarily on said client (101).

10. A system for guiding a user, in particular regarding the connectivity of electronic devices, in a computer network, **wherein** a server (102) is adapted to receive a message (202) comprising information about at least two devices (111, 121, 131, 141) selected (200) by a user, to determine (203) a user guide depending on information or rules about devices (111, 121, 131, 141) retrieved from storage and said message (202), and to send a further message (204) comprising at least a part of said user guide, and wherein a client (101) is adapted to prompt (200) said user for information about said at least two devices (111, 121, 131, 141), to determine (201) said message (202) comprising said information about said at least two devices (111, 121, 131, 141), to send said message (202), to receive said further message (204) comprising at least part of said user guide, and to output (205) said user guide at least partially.

11. A server (102) for determining a user guide, in particular regarding the connectivity of electronic devices, in a computer network, **adapted** to receive a message (202) comprising information about at least two devices (111, 121, 131, 141) selected by a user, to determine (203) a user guide depending on information about devices (111, 121, 131, 141) retrieved from storage and said message (202), and to send a further message (204) comprising at least a part of said user guide.

12. A client (101) for determining a user guide, in particular regarding the connectivity of electronic devices, in a computer network, **adapted** to prompt (200) said user for information about at least two devices (111, 121, 131, 141), to determine (201) a message (202) comprising said information about said at least two devices (111, 121, 131, 141), to send said message (202), to receive said further message (204) comprising at least part of said user guide, and to output (205) said user guide at least partially.

13. A computer program for determining a user guide, in particular regarding the connectivity of electronic devices, in a computer network, **wherein** said computer program, when executed on a computer, causes the computer to receive a message (202) comprising information or rules about at least two devices (111, 121, 131, 141) selected (200) by a user, to determine (203) said user guide depending on said information or rules about said devices (111, 121, 131, 141) retrieved from storage and said message (202), and to send a further message (204) comprising at least a part of said user guide.

14. A computer program for outputting a user guide, in particular regarding the connectivity of electronic devices, in a computer network, **wherein** said computer program, when executed on a computer, causes the computer to prompt (200) a user for information about at least two devices (111, 121, 131, 141), to determine (201) a message (202) comprising said information about said at least two devices (111, 121, 131, 141), to send said message (202), to receive a further message (204) comprising at least part of said user guide, and to output (205) said user guide at least partially.

15. A computer program product for determining a user guide, in particular regarding the connectivity of electronic devices, in a computer network comprising a computer usable medium having a computer readable program, **wherein** said computer readable program, when executed on a computer, causes the computer to receive a message (202) comprising information about at least two devices (111, 121, 131, 141) selected (200) by a user, to determine (203) said user guide depending on information or rules about devices (111, 121, 131, 141) retrieved from storage and said message (202), and to send a further message (204) comprising at least a part of said user guide.

16. A computer program product for outputting a user guide, in particular regarding the connectivity of electronic devices, in a computer network comprising a computer usable medium having a computer readable program, **wherein** said computer readable program, when executed on a computer, causes the computer to prompt (200) a user for information about at least two devices (111, 121, 131, 141), to determine (201) a message (202) comprising said information about said at least two devices (111, 121, 131, 141), to send said message (202), to receive a further message (204) comprising at least part of said user guide, and to output (205) said user guide at least partially.

## Amended claims

### Amended claims in accordance with Rule 137(2) EPC.

**1.** A method for determining a user guide, in particular regarding the connectivity of electronic devices, in a computer network, **characterized in that** a message (202) comprising information about at least two devices (111, 121, 131, 141) selected (200) by a user is received by a server (102), said user guide is determined (203) by said server (102) depending on information or rules about devices (111, 121, 131, 141) retrieved from storage and said message (202), and a further message (204) comprising at least a part of said user guide is sent by said server (102).

**2.** The method according to claim 1, wherein said information about said devices (111, 121, 131, 141) comprises a machine readable rule concerning the connectivity between at least two of said devices (111, 121, 131, 141) and said user guide is determined (203) depending on said machine readable rule.

**3.** The method according to claim 1, wherein said user guide is determined (203) as a document file.

**4.** The method according to claim 1, wherein said user guide is determined (203) as an audio file.

**5.** A method for outputting a user guide in a computer network, **characterized in that** a user is prompted for information about at least two devices (111, 121, 131, 141) by a client (101), a message comprising said information about said at least two devices (111, 121, 131, 141) is determined by said client (101), said message (202) is sent by said client (101), a further message (204) comprising at least part of said user guide is received by said client (101), and said user guide is output at least partially by said client (101).

**6.** The method according to claim 5, wherein a list of devices (111, 121, 131, 141) is requested by said client (101) from a server (102), information about said list is output by said client (101) when prompting (200) for said user input, a selection of said user from said list is determined by said client (101), and said information about said at least two devices (111, 121, 131, 141) is determined by said client (101) depending on said selection of said user from said list.

**7.** The method according to claim 5, wherein said further message (204) comprises at least part of a document file, said client (101) comprises a display and said document file is displayed (205) at least partially on said display.

**8.** The method according to claim 5, wherein said further message (204) comprises at least part of an audio file, said client (101) comprises a speaker and said audio file is read out (205) at least partially via said speaker.

**9.** The method according to claim 5, wherein said client (101) comprises a storage, wherein in said method the step of sending said message (202) comprising information about at least two devices (111, 121, 131, 141) selected (200) by said user is replaced by a step of determining said user guide depending on information about devices (111, 121, 131, 141) retrieved from said storage and said message (202), and the step of receiving said further message (204) comprising at least a part of said user guide is replaced by a step of storing said at least part of said user guide at least temporarily on said client (101).

**10.** A system for guiding a user, in particular regarding the connectivity of electronic devices, in a computer network, **characterized in that** a server (102) is adapted to receive a message (202) comprising information about at least two devices (111, 121, 131, 141) selected (200) by a user, to determine (203) a user guide depending on information or rules about devices (111, 121, 131, 141) retrieved from storage and said message (202), and to send a further message (204) comprising at least a part of said user guide, and wherein a client (101) is adapted to prompt (200) said user for information about said at least two devices (111, 121, 131, 141), to determine (201) said message (202) comprising said information about said at least two devices (111, 121, 131, 141), to send said message (202), to receive said further message (204) comprising at least part of said user guide, and to output (205) said user guide at least partially.

**11.** A server (102) for determining a user guide, in particular regarding the connectivity of electronic devices, in a computer network, **characterized in that** said server (102) is adapted to receive a message (202) comprising information about at least two devices (111, 121, 131, 141) selected by a user, to determine (203) a user guide depending on information about devices (111, 121, 131, 141) retrieved from storage and said message (202), and to send a further message (204) comprising at least a part of said user guide.

**12.** A client (101) for determining a user guide, in particular regarding the connectivity of electronic devices, in a computer network, **characterized in that** said client (101) is adapted to prompt (200) said user for information about at least two devices (111, 121, 131, 141), to determine (201) a message (202) comprising said information about said at least two devices (111, 121, 131, 141), to send said message (202), to receive said further message (204) comprising at least part of said user guide, and to output (205) said user guide at least partially.

**13.** A computer program for determining a user guide, in particular regarding the connectivity of electronic devices, in a computer network, **characterized in that** said computer program, when executed on a computer, causes the computer to receive a message (202) comprising information or rules about at least two devices (111, 121, 131, 141) selected (200) by a user, to determine (203) said user guide depending on said information or rules about said devices (111, 121, 131, 141) retrieved from storage and said message (202), and to send a further message (204) comprising at least a part of said user guide.

**14.** A computer program for outputting a user guide, in particular regarding the connectivity of electronic devices, in a computer network, **characterized in that** said computer program, when executed on a computer, causes the computer to prompt (200) a user for information about at least two devices (111, 121, 131, 141), to determine (201) a message (202) comprising said information about said at least two devices (111, 121, 131, 141), to send said message (202), to receive a further message (204) comprising at least part of said user guide, and to output (205) said user guide at least partially.

**15.** A computer program product for determining a user guide, in particular regarding the connectivity of electronic devices, in a computer network comprising a computer usable medium having a computer readable program, **characterized in that** said computer readable program, when executed on a computer, causes the computer to receive a message (202) comprising information about at least two devices (111, 121, 131, 141) selected (200) by a user, to determine (203) said user guide depending on information or rules about devices (111, 121, 131, 141) retrieved from storage and said message (202), and to send a further message (204) comprising at least a part of said user guide.

**16.** A computer program product for outputting a user guide, in particular regarding the connectivity of electronic devices, in a computer network comprising a computer usable medium having a computer readable program, **characterized in that** said computer readable program, when executed on a computer, causes the computer to prompt (200) a user for information about at least two devices (111, 121, 131, 141), to determine (201) a message (202) comprising said information about said at least two devices (111, 121, 131, 141), to send said message (202), to receive a further message (204) comprising at least part of said user guide, and to output (205) said user guide at least partially.
